(19) Europäisches Patentamt / European Patent Office / Office européen des brevets

(11) **EP 2 991 840 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(21) Anmeldenummer: **14718598.7**

(22) Anmeldetag: **22.04.2014**

(51) Int Cl.:
**B60B 17/00** *(2006.01)*

(86) Internationale Anmeldenummer:
**PCT/EP2014/058039**

(87) Internationale Veröffentlichungsnummer:
**WO 2014/177410 (06.11.2014 Gazette 2014/45)**

(54) **RADSCHEIBE FÜR EIN SCHIENENFAHRZEUG**

WHEEL DISC FOR A RAIL VEHICLE

DISQUE DE ROUE POUR VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2013 DE 102013007447**

(43) Veröffentlichungstag der Anmeldung:
**09.03.2016 Patentblatt 2016/10**

(73) Patentinhaber: **Voith Patent GmbH 89522 Heidenheim (DE)**

(72) Erfinder:
• **LUBOS, Florian 89542 Herbrechtingen (DE)**
• **KAMPS, Andreas 73460 Hüttlingen (DE)**
• **SCHNEIDER, Lars 01219 Dresden (DE)**

(74) Vertreter: **Dr. Weitzel & Partner Patent- und Rechtsanwälte mbB Friedenstrasse 10 89522 Heidenheim (DE)**

(56) Entgegenhaltungen:
EP-A1- 0 794 872      WO-A1-03/064182
DE-A1- 2 320 726      US-A1- 2013 026 723

**Beschreibung**

Die Erfindung betrifft eine Radscheibe für ein Schienenfahrzeug nach der im Oberbegriff von Anspruch 1 näher definierten Art.

Radscheiben für Schienenfahrzeuge sind aus dem allgemeinen Stand der Technik bekannt. Sie bestehen typischerweise aus einer um eine Drehachse umlaufenden Radnabe sowie einem Radkranz, welcher zum Abrollen auf den Schienen bestimmt ist. Die zentral liegende Radnabe und der am äußeren Umfang liegende Radkranz sind dabei über einen sogenannten Steg miteinander verbunden. Dieser Steg, welcher in radialer Richtung gerade, schräg oder gebogen ausgeführt wird, ist typischerweise als umlaufende Scheibe ausgebildet. Er kann insbesondere weitgehend rotationssymmetrisch aufgebaut sein und somit in jedem radialen Schnitt dieselbe oder eine vergleichbare Kontur aufweisen. Unter der Kontur im Sinne der hier vorliegenden Erfindung ist dabei die seitliche begrenzende Oberflächenform der Radscheibe im radialen Schnitt zu verstehen. Eine gerade Radscheibe hätte also eine durch eine Gerade ausgebildete Kontur, eine gebogene Radscheibe eine durch einen S-förmigen oder C-förmigen Bogen ausgebildete Kontur.

Nun ist es so, dass insbesondere die Übergangskurve von der Radnabe zum Steg und, insbesondere bei kleineren Radscheiben, auch oder alternativ dazu die Übergangskurve zwischen dem Steg und dem Radkranz einer sehr hohen Belastung unterliegt. Um dieser hohen Belastung entgegenzuwirken, sind entsprechende Materialstärken oder geeignete Bearbeitungsschritte zur Verfestigung des Materials in den kritischen Bereichen notwendig. Dies ist aufwändig und teuer und macht die Radscheibe beim Einsatz von hohen Materialstärken entsprechend schwer.

Um dieser Problematik entgegenzuwirken ist es aus der EP 0 794 872 A1 bekannt, dass durch eine komplexe Konstruktionsvorgabe für die Übergänge die Spannungen in der Radscheibe homogenisiert werden, sodass mit geringeren Materialstärken eine hohe Festigkeit erzielt werden kann. Der Aufbau ist dabei außerordentlich komplex und nutzt eine Funktion (Parabel) fünfter Ordnung zur Konstruktion der Übergänge. Dies ist einerseits bei der Konstruktion und andererseits bei der Fertigung aufwändig in der Programmierung.

Den nächstliegenden Stand der Technik bildet die DE 23 20 726 A1, welche eine vergleichbare Radscheibe für ein Schienenfahrzeug mit einer eine Drehachse umgebenden Radnabe zeigt. Zwischen dem Steg und dem Radkranz ist dabei auf wenigstens einer Seite in jeder radialen Schnittebene die Übergangskurve durch eine Funktion ausgebildet, wobei diese Funktion tangentenstetig sowohl in die Kontur des Stegs als auch der Radnabe oder des Radkranzes übergeht.

Zum weiteren Stand der Technik wird ferner auf die WO 03/064 182 A1 sowie die US 2013/026723 A1 hingewiesen.

Die Aufgabe der hier vorliegenden Erfindung besteht nun darin eine Radscheibe für ein Schienenfahrzeug anzugeben, welche eine noch weiter verbesserte Festigkeit ermöglicht und welche darüber hinaus einfach und effizient konstruiert und hergestellt werden kann. Erfindungsgemäß wird diese Aufgabe durch eine Radscheibe mit den Merkmalen im kennzeichnenden Teil des Patentanspruchs 1 gelöst. Vorteilhafte Ausgestaltungen ergeben sich aus den restlichen hiervon abhängigen Unteransprüchen.

Bei der erfindungsgemäßen Radscheibe für ein Schienenfahrzeug ist es vorgesehen, dass zumindest eine der Übergangskurven zwischen dem Steg und der Radnabe und/oder zwischen dem Steg und dem Radkranz auf wenigstens einer axialen Seite in jeder seiner radialen Schnittebenen so ausgebildet ist, dass die folgenden drei Bedingungen erfüllt sind. Die Übergangskurve wird grundsätzlich durch eine Bezierkurve ausgebildet. Eine solche Bezierkurve ist einfach, effizient und ermöglicht einen sehr gleichmäßigen Übergang mit hoher Festigkeit und sehr guter Spannungsverteilung auf den gesamten Bereich des Übergangs. Diese Bezierkurve geht an ihrem einen Ende tangentenstetig in die Kontur des Stegs über. Außerdem geht die Bezierkurve an ihrem anderen Ende tangentenstetig in die Kontur der Radnabe und/oder des Radkranzes, je nachdem, welche der Übergangskruven sie ausbildet, über. Durch diesen tangentenstetigen Anschluss der Bezierkurve an die Kontur entweder der Radnabe und/oder des Radkranzes entsteht ein Aufbau, welcher sehr einfach und effizient konstruiert und für die Fertigung programmiert werden kann. Er ermöglicht mit minimalem Materialeinsatz durch eine Vergleichmäßigung der Spannungsverteilung eine sehr hohe Festigkeit der Radscheibe.

Eine vorteilhafte Weiterbildung der erfindungsgemäßen Radscheibe sieht es dabei vor, dass die Bezierkurve als Bezierkurve zweiten oder dritten Grades ausgegbildet ist. Eine solche quadratische oder kubische Bezierkurve hat dabei den Vorteil, dass sie lediglich drei oder vier Stützpunkte (Haupt- und Kontrollpunkte) benötigt und deshalb besonders einfach und effizient in der Berechnung ist. Durch einen höheren Grad der Bezierkurve werden die Ergebnisse hinsichtlich der mechanischen Belastbarkeit nicht oder nur unwesentlich verbessert, sodass eine quadratische oder kubische Bezierkurve mit dem entsprechenden verringerten Berechnungsaufwand für die erfindungsgemäße Radscheibe von besonderem Vorteil ist.

Gemäß einer besonders günstigen Ausgestaltung der erfindungsgemäßen Radscheibe kann es ferner vorgesehen sein, dass die Bezierkurve zwei Hauptpunkte und einem oder zwei Konrollpunkte aufweist, wobei die Hauptpunkte in dem Bereich liegen, indem die Bezierkurve tangentenstetig in die Kontur des Stegs und der Radnabe oder des Radkranzes übergeht, und wobei die beiden Kontrollpunkte auf zwei Tangenten an den Hauptpunkten in den tangentenstetigen Übergängen liegen. Bei dieser besonders günstigen Ausgestaltung der erfindungsgemäßen Übergangskurve in Form einer Bezierkurve handelt es sich also um eine kubische Bezierkurve mit vier Stützpunkten. Die beiden Hauptpunkte liegen dabei genau in den Punkten, in denen die Anschlusskontur endet und die Bezierkurve beginnt beziehungsweise die Bezierkurve endet und die Anschlusskontur beginnt. Die beiden Kontrollpunkte liegen dann auf Tangenten, welche die tangentenstetigen Übergänge in den beiden Hauptpunkten entsprechend verlängern. Bevorzugt liegen die Kontrollpunkte dabei zwischen den Hauptpunkten und dem typischerweise immer auftretenden Schnittpunkt der beiden Tangenten. Mit minimalem Berechnungsaufwand lässt sich so eine Radscheibe mit einem sehr stabilen Übergang zwischen dem Steg und der Radnabe beziehungsweise dem Steg und dem Radkranz erzielen.

In einer weiteren sehr günstigen Ausgestaltung hiervon ist es nun ferner vorgesehen, dass die beiden Kontrollpunkte auf den Tangenten in einem Schnittpunkt der Tangenten zu einem Kontrollpunkt zusammenfallen. Durch die direkte Wahl der beiden Kontrollpunkte, indem diese einen gemeinsamen Kontrollpunkt ausbilden, welcher genau auf dem Schnittpunkt der Tangenten liegt, wird der Berechnungsaufwand weiter vereinfacht, wodurch die Konstruktion, die Programmierung und die Fertigung nochmals effizienter wird.

In einer weiteren sehr günstigen Ausgestaltung der Radscheibe ist es ferner vorgesehen, dass die Kontur der Radnabe im Anschluss an die Bezierkurve eine Anschlusskontur in Form einer Geraden aufweist, welche in einem von null verschiedenen Winkel, insbesondere einem Winkel von mehr als 5°, zur axialen Richtung verläuft. Die Radscheibe kann in dieser sehr günstigen Ausgestaltung also so ausgebildet sein, dass die Radnabe und der Radkranz nicht mittig übereinander liegen, sondern von einem schräg verlaufenden Steg, welcher in seiner Gesamtform den Mantel eines Pyramidenstumpfs ähnlich ist, miteinander verbunden sind. Dies kann hinsichtlich der eingeleiteten Kräfte und/oder des Bauraums für eventuelle an dem Steg zu befestigende Anbauteile von entscheidendem Vorteil sein.

In einer vorteilhaften Weiterbildung der erfindungsgemäßen Radscheibe kann es ferner vorgesehen sein, dass die Kontur des Stegs im Anschluss an die Bezierkurve eine Anschlusskontur in Form eines Bogens aufweist. Ein solcher Bogen welcher tangentenstetig in die Bezierkurve übergeht, tritt insbesondere bei gebogenen Stegen, also im radialen Schnitt S-förmig oder C-förmig verlaufenden Stegen, auf. In einer alternativen Ausgestaltung hiervon ist es dagegen vorgesehen, dass die Kontur des Stegs im Anschluss an die Bezierkurve eine Außenkontur in Form einer Geraden aufweist.

In einer günstigen Ausgestaltung ist der Steg in Richtung des Radkranzes verjüngt. Unabhängig von der genauen Ausgestaltung des Stegs beispielsweise über gerade oder bogenförmig verlaufende Außenkonturen kann sich der Steg in Richtung von der Radnabe zum Radkranz hin verjüngen. Ein Winkel dieser Verjüngung gegenüber der Mittelachse des Stegs kann dabei vorzugsweise mehr als 0,5° betragen. Er wird im Allgemeinen weniger als 20°, vorzugsweise weniger als 15° betragen. Ein geeignet ausgewählter Winkel in diesem Bereich ermöglicht so einen sehr harmonischen tangentenstetigen Übergang von der Bezierkurve in die Kontur des Stegs und verringert damit Spannungsspitzen im Bereich des Stegs, sodass mit minimalem Materialeinsatz die Festigkeit weiter erhöht werden kann.

In einer sehr vorteilhaften Weiterbildung hiervon ist es, unabhängig davon, ob die Anschlusskontur als Gerade oder als Bogen ausgebildet ist, vorgesehen, dass die Bezierkurve so ausgebildet ist, dass der tangentenstetige Übergang zur Anschlusskontur abgeschlossen ist, bevor in wenigstens einem der radialen Schnitte ein Anschlussbereich für ein Aufnahmeelement und/oder Anbauelement an dem Steg angeordnet ist. Die Bezierkurve als Übergangskurve in die Anschlusskontur des Stegs ist in ihrer radialen Ausdehnung so ausgewählt, dass diese in jedem Fall abgeschlossen ist, bevor Anbauelemente und/oder Aufnahmeelemente, beispielsweise Aufnahmeelemente für eine Bremsscheibe oder andere an der Radscheibe anzuschließende Elemente, vorgesehen sind. Dies garantiert, dass solche Anbauelemente und/oder Aufnahmeelemente, welche den Verlauf der angedachten Bezierkurve stören würden, in deren Bereich nicht auftreten. Die Bezierkurve wird also in ihrer radialen Ausdehnung so angepasst, dass der harmonische durch die Bezierkurve geschaffene Übergang mit besten Festigkeitseigenschaften nicht von solchen "Störstellen" unterbrochen wird. Dies gewährleistet die beste Festigkeit. Ungeachtet dessen kann es vorgesehen sein, dass im Fußbereich des Stegs, im Material der Radnabe eine Ölabpressbohrung oder eine Schmierölbohrung zur Schmierung der Radnabe auf einer Achse vorgesehen ist. Eine solche Bohrung ist dabei nicht als Störstelle im Sinne der hier vorliegenden Erfindung zu verstehen.

Weitere vorteilhafte Ausgestaltungen der erfindungsgemäßen Radscheibe ergeben sich aus dem Ausführungsbeispiel, welches nachfolgend unter Bezugnahme auf die Figuren näher beschrieben wird.

Dabei zeigen:

Figur 1      eine Seitenansicht einer Radscheibe;

Figur 2      einen radialen Schnitt durch eine Hälfte einer Radscheibe;

Figur 3      mehrere mögliche Ausgestaltungen der Radscheibe in schematischen Darstellungen analog zu der Darstellung in Figur 2; und

Figur 4      eine erfindungsgemäße Ausgestaltung des Übergangs zwischen der Radnabe und dem Steg.

**EP 2 991 840 B1**

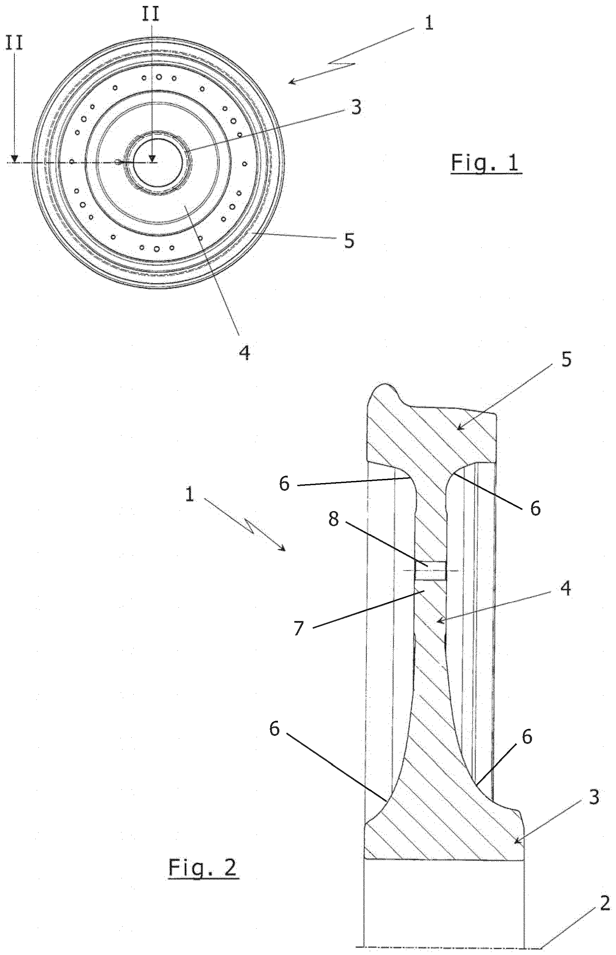

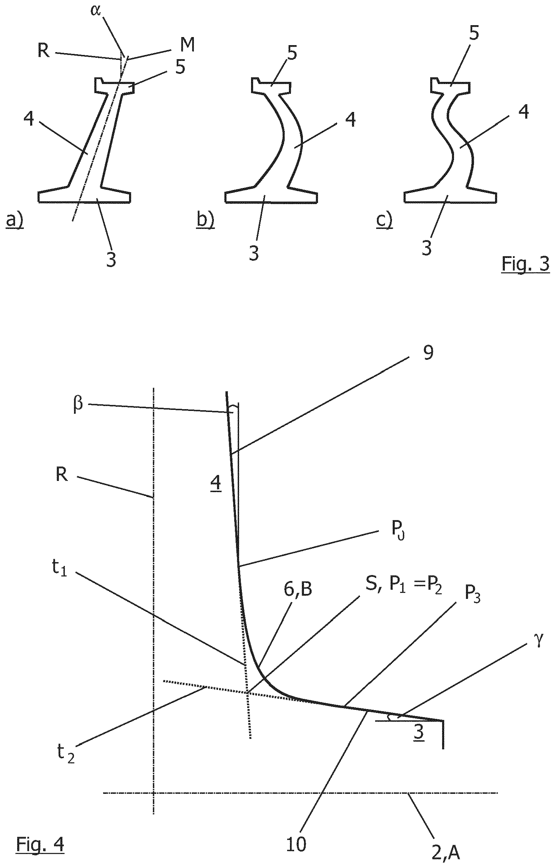

In der Darstellung der Figur 1 ist rein beispielhaft eine Seitenansicht einer Radscheibe 1 zu erkennen. Eine solche Radscheibe 1 wird als Rad für Schienenfahrzeuge verwendet. Der Aufbau ist aus dem in Figur 1 mit II - II bezeichneten Schnitt, welcher in Figur 2 zu erkennen ist, näher dargestellt. Der dargestellte Aufbau der Figur 2 ist dabei rein schematisch zur Verdeutlichung der Elemente einer Radscheibe zu verstehen. Der erfindungsgemäße Aufbau wird dann anhand der Figur 4 später noch näher erläutert. In dem radialen Schnitt der Figur 2 ist zu erkennen, dass die Radscheibe 1 aus einer eine Drehachse 2 umgebenden Radnabe 3 besteht. Diese Radnabe 3 wird über ein scheibenförmiges Bauteil, welches als Steg 4 bezeichnet wird, mit einem Radkranz 5, welcher beim Einsatz der Radscheibe 1 auf den Schienen abrollt, verbunden. Dieser Aufbau, wie er in Figur 2 dargestellt ist, ist allgemein bekannt und üblich. Es handelt sich bei der Darstellung in Figur 2 um einen Aufbau mit einem sogenannten geraden Steg 4, welcher senkrecht zur Drehachse 2 in radialer Richtung verläuft.

Anstelle eines solchen geraden Stegs 4 können auch andere Konstruktionen vorgesehen sein. Diese sind schematisch in Figur 3 angedeutet. In der Figur 3a) ist dabei ein schräg verlaufender Steg 4 zu erkennen, dessen Mittelachse M in einem Winkel $\alpha$ gegenüber der radialen Richtung R geneigt ausgebildet ist. Der Winkel $\alpha$ kann dabei bevorzugt mehr als 5° betragen. In der Darstellung der Figur 3b) ist ein im radialen Schnitt C-förmig gebogener Steg 4 zu erkennen, in Figur 3c) ein S-förmiger Steg 4. Die C-förmige bzw. S-förmige Ausbildung des Stegs 4 setzt sich entsprechend aus einem gleichlaufenden beziehungsweise zwei oder mehr gegenläufigen Bögen, welche die Außenkontur des Stegs 4 ausbilden, zusammen.

Besonders kritisch bei Radscheiben 1 sind Übergangskurven 6 zwischen der Radnabe 3 und dem Steg 4 beziehungsweise dem Steg 4 und dem Radkranz 5. Deshalb ist es vorgesehen, dass zumindest eine dieser in der Darstellung der Figur 2 mit 6 bezeichneten Übergangskurven in der nachfolgend in Figur 4 am Beispiel eines Übergangs zwischen der Radnabe 3 und dem geraden Steg 4 beschriebenen Art und Weise ausgebildet ist. Die Übergangskurve 6 ist dabei so ausgestattet, dass sie in der radialen senkrecht auf der Drehachse 2 bzw. der axialen Richtung A stehenden Richtung R jeweils endet, bevor der in der Darstellung der Figur 2 verdickt dargestellte Anschlussbereich 7 beginnt, welcher zur Aufnahme von Anbauelementen oder Aufnahmeelementen für Anbauelemente vorgesehen ist. Beispielhaft ist dies in der Darstellung der Figur 2 durch eine Bohrung 8 angedeutet, welche zur Aufnahme von Anbauelementen dient. Dies können beispielsweise Bremsscheiben, Radschallabsorber oder dergleichen sein.

Die Übergangskurven 6 oder zumindest eine der in Figur 2 eingezeichneten Übergangskurven 6 der Radscheibe 1 sind nun wie, nachfolgend an einem bevorzugten Ausführungsbeispiel erläutert, ausgeführt. Dieses ist in der schematischen Darstellung der Figur 4 zu erkennen. Die einzelnen Abschnitte sind dabei nicht maßstabsgerecht dargestellt. Die Darstellung der Figur 4 ist schematisch zu verstehen und dient dazu, die Beschreibung der Kontur zu erleichtern. Die Übergangkurve 6 wird dabei durch eine in der Darstellung der Figur 4 mit B bezeichnete Bezierkurve, ausgebildet.

Grundsätzlich und unabhängig von einer in Figur 4 dargestellten spezifischen Ausführungsform lässt sich die Bezierkurve B wie folgt mittels des Bernsteinpolynoms mathematisch darstellen:

$$\vec{X}(t) = \sum_{i=0}^{n} \binom{n}{i} t^i \cdot \left(1-t\right)^{n-i} \cdot \vec{P}_i$$

Dabei sind $\vec{P}_i$ die Richtungsvektoren zu den Stützpunkten (Haupt- und Kontrollpunkte)

$$\vec{P}_0 = \begin{pmatrix} P_{0x} \\ P_{0y} \\ 0 \end{pmatrix} \qquad \vec{P}_1 = \begin{pmatrix} P_{1x} \\ P_{1y} \\ 0 \end{pmatrix} \qquad \vec{P}_2 = \begin{pmatrix} P_{2x} \\ P_{2y} \\ 0 \end{pmatrix} \qquad \vec{P}_3 = \begin{pmatrix} P_{3x} \\ P_{3y} \\ 0 \end{pmatrix}$$

Für kubische Bezierkurven gilt beispielsweise:

$$\vec{X}(t) = \sum_{i=0}^{3} \binom{3}{i} t^i \cdot \left(1-t\right)^{3-i} \cdot \vec{P}_i = \left(1-t\right)^3 \cdot \vec{P}_0 + 3t(1-t)^2 \cdot \vec{P}_1 + 3t^2(1-t) \cdot \vec{P}_2 + t^3 \cdot \vec{P}_3$$

$$\vec{X}(t) = (-\vec{P}_0 + 3 \cdot \vec{P}_1 - 3 \cdot \vec{P}_2 + \vec{P}_3) \cdot t^3 + (3 \cdot \vec{P}_0 - 6 \cdot \vec{P}_1 + 3 \cdot \vec{P}_2) \cdot t^2 + (-3 \cdot \vec{P}_0 + 3 \cdot \vec{P}_1) \cdot t + \vec{P}_0$$

Mit Einführung der vektoriellen Faktoren gilt:

$$\vec{D} = -\vec{P}_0 + 3 \cdot \vec{P}_1 - 3 \cdot \vec{P}_2 + \vec{P}_3$$

$$\vec{C} = 3 \cdot \vec{P}_0 - 6 \cdot \vec{P}_1 + 3 \cdot \vec{P}_2$$

$$\vec{B} = -3 \cdot \vec{P}_0 + 3 \cdot \vec{P}_1$$

$$\vec{A} = \vec{P}_0$$

Somit ergibt sich die Parameterform der Bezierkurve B:

$$\vec{X}(t) = \vec{D} \cdot t^3 + \vec{C} \cdot t^2 + \vec{B} \cdot t + \vec{A}$$

Werden alle Punkte $\vec{X}$ für $t \in [0;1]$ berechnet, so ergibt sich die Bezierkurve B zwischen $\vec{P}_0$ und $\vec{P}_3$ mit den Kontrollpunkten $\vec{P}_1$ und $\vec{P}_2$.

Die Hauptpunkte $P_0$ und $P_3$ der der Bezierkurve B liegen dabei am Übergang einer Geraden 9, welche um einen Winkel $\beta$ gegenüber der radialen Richtung R geneigt ausgebildet ist, und der Bezierkurve B. Der andere Hauptpunkt $P_3$ liegt am Übergang der Bezierkurve B in eine weitere Gerade 10, welche in dem in Figur 4 dargestellten Ausführungsbeispiel Teil der Radnabe 3 ist, und welche in einem Winkel $\gamma$ zur axialen Richtung A geneigt ausgebildet ist. Die Radnabe 3 verjüngt sich also in dem in Figur 4 dargestellten Ausführungsbeispiel ausgehend vom Steg 4 in Richtung ihres axialen Endes. Ebenso verjüngt sich der Steg 4 ausgehend von der Radnabe 3 in Richtung des hier nicht dargestellten Radkranzes 5. Die Winkel $\beta$, $\gamma$ liegen dabei typischerweise unter 20°, der Winkel $\beta$ im Bereich des sich verjüngenden Stegs 4 typischerweise zwischen 1,5 - 2°, der Winkel $\gamma$ in der Größenordnung zwischen 5 und 15°.

Die Übergänge zwischen der Bezierkurve B und den Geraden 9, 10, welche bei anderer Ausgestaltung gegebenenfalls auch als Bögen ausgebildet sein können, erfolgt dabei in den jeweiligen Hauptpunkten $P_0$, $P_3$ tangentenstetig. Die Tangente $t_1$, $t_2$ an den Hauptpunkten $P_0$, $P_3$ sind in der Darstellung der Figur 4 punktiert eingezeichnet. Beispielsweise bei einer kubischen Ausgestaltung der Bezierkurve B würde nun jeweils einer der Kontrollpunkte $P_1$, $P_2$ auf der jeweiligen Tangente $t_1$, $t_2$ liegen und könnten auf dieser zur Ausgestaltung der Bezierkurve B entsprechend verschoben werden. In dem hier dargestellten besonders günstigen Ausführungsbeispiel fallen die beiden Kontrollpunkte $P_1$, $P_2$ zusammen und liegen beide auf einem Schnittpunkt S zwischen den beiden Tangenten $t_1$, $t_2$. Dieser Schnittpunkt S bildet also gleichzeitig beide Kontrollpunkte $P_1$, $P_2$ aus. Wir haben hier also den Sonderfall einer quadratischen Bezierkurve B, welche ihren dritten Kontrollpunkt $P_1 = P_2$ genau im Schnittpunkt S der beiden Tangenten $t_1$, $t_2$ aufweist. Dies ist besonders einfach und effizient in der Berechnung und dementsprechend in der Programmierung der für die Fertigung benötigten Maschinen. Die so ausgestaltete Radscheibe 1 lässt sich also besonders einfach und effizient im Bereich ihrer Übergangskurve 6 herstellen.

Insgesamt erlaubt der Aufbau durch eine Harmonisierung der Spannungsverteilungen eine sehr hohe Festigkeit bei minimalem Materialeinsatz und ohne dass aufwändige Verfahren wie beispielsweise eine Verfestigung des Materials im Bereich des Übergangs notwendig werden. Ungeachtet dessen kann die Festigkeit durch solche Verfahren zur Oberflächenverfestigung weiter gesteigert werden. Die Verfahren können dabei sowohl mechanisch (Kugelstrahlen, Rollieren, etc.) als auch werkstofftechnisch/chemisch (Einsatzhärten, Nitrieren, etc.) ausgebildet sein.

**Patentansprüche**

**1.** Radscheibe (1) für ein Schienenfahrzeug mit

1.1 einer eine Drehachse (2) umgebenden Radnabe (3);
1.2 einem Radkranz (5); und
1.3 einem die Radnabe (3) mit dem Radkranz (5) verbindenden Steg (4); **dadurch gekennzeichnet, dass**
1.4 eine Übergangskurve (6) zwischen dem Steg (4) und der Radnabe (3) und/oder eine Übergangskurve (6) zwischen dem Steg (4) und dem Radkranz (5) auf wenigstens einer axialen Seite in jeder radialen Schnittebene so ausgebildet ist, dass

1.5 die bzw. jede Übergangskurve (6) als eine Bezierkurve (B) ausgebildet ist,

1.6 die Bezierkurve (B) tangentenstetig in die Kontur des Stegs (4) übergeht; und

1.7 die Bezierkurve (B) tangentenstetig in die Kontur der Radnabe (3) oder des Radkranzes (5) übergeht.

**2.** Radscheibe (1) nach Anspruch 1, **dadurch gekennzeichnet, dass** die Bezierkurve (B) als Bezierkurve (B) zweiten oder dritten Grades ausgebildet ist.

**3.** Radscheibe (1) nach Anspruch 1 oder 2, **dadurch gekennzeichnet, dass** die Bezierkurve (B) zwei Hauptpunkte $(P_0, P_3)$ und einen oder zwei Kontrollpunkte $(P_1, P_2)$ aufweist, wobei die Hauptpunkte $(P_0, P_3)$ im dem Bereich liegen, in dem die Bezierkurve (B) tangentenstetig in die Kontur des Stegs (4) und der Radnabe (3) oder des Radkranzes (5) übergeht, und wobei die Kontrollpunkte $(P_1, P_2)$ auf zwei Tangenten $(t_1, t_2)$ an den Hauptpunkten $(P_0, P_3)$ in den tangentenstetigen Übergänge liegen.

**4.** Radscheibe (1) nach Anspruch 3, **dadurch gekennzeichnet, dass** die beiden Kontrollpunkte $(P_1, P_2)$ auf den Tangenten $(t_1, t_2)$ in einem Schnittpunkt (S) der Tangenten $(t_1, t_2)$ zu einem Kontrollpunkt $(P_1 = P_2)$ zusammenfallen.

**5.** Radscheibe (1) nach einem der Ansprüche 1 bis 4, **dadurch gekennzeichnet, dass** die Kontur der Radnabe (3) im Anschluss an die Bezierkurve (B) eine Anschlusskontur in Form einer Geraden (10) aufweist, welche in einem von Null verschiedenen Winkel, insbesondere einem Winkel ($\gamma$) von mehr als 5°, zur axialen Richtung (A) verläuft.

**6.** Radscheibe (1) nach einem der Ansprüche 1 bis 5, **dadurch gekennzeichnet, dass** die Kontur des Stegs (4) im Anschluss an die Bezierkurve (B) eine Anschlusskontur in Form eines Bogens aufweist.

**7.** Radscheibe (1) nach einem der Ansprüche 1 bis 5, **dadurch gekennzeichnet, dass** die Kontur des Stegs (4) im Anschluss an die Bezierkurve (B) eine Anschlusskontur in Form einer Geraden (9) aufweist.

**8.** Radscheibe (1) nach einem der Ansprüche 1 bis 7, **dadurch gekennzeichnet, dass** der Steg (4) sich in Richtung von der Radnabe (3) hin zu dem Radkranz (3) verjüngt.

**9.** Radscheibe (1) nach einem der Ansprüche 1 bis 8, **dadurch gekennzeichnet, dass** die Bezierkurve (B) so ausgebildet ist, dass der tangentenstetige Übergang zur Anschlusskontur abgeschlossen ist, bevor in wenigstens einem der radialen Schnitte ein Anschlussbereich (7) für ein Aufnahmeelement und/oder Anbauelement an dem Steg (4) angeordnet ist.

**Claims**

**1.** A wheel disc (1) for a rail vehicle, comprising

1.1 a wheel hub (3) surrounding an axis of rotation (2);

1.2 a wheel rim (5); and

1.3 a web (4) connecting the wheel hub (3) to the wheel rim (5);

**characterized in that**

1.4 a transition curve (6) is formed between the web (4) and the wheel hub (3) and/or a transition curve (6) between the web (4) and the wheel rim (5) on at least one axial side in each radial plane of intersection in such a way that 1.5 the or each transition curve (6) is formed as a Bezier curve (B),

1.6 the Bezier curve (B) converges in a tangent-continous manner into the contour of the web (4); and

1.7 the Bezier curve (B) converges in a tangent-continous manner into the contour of the wheel hub (3) or of the wheel rim (5).

**2.** A wheel disc (1) according to claim 1, **characterized in that** the Bezier curve (B) is formed as a Bezier curve (B) of second or third degree.

**3.** A wheel disc (1) according to claim 1 or 2, **characterized in that** the Bezier curve (B) comprises two main points $(P_0, P_3)$ and one or two control points $(P_1, P_2)$, wherein the main points $(P_0, P_3)$ are situated in the region in which the Bezier curve (B) converges in a tangent-continous manner into the contour of the web (4) and the wheel hub (3) or of the wheel rim (5), and wherein the control points $(P_1, P_2)$ lie on two tangents $(t_1, t_2)$ at the main points $(P_0,$

$P_3$) in the tangent-continuous transitions.

4. A wheel disc (1) according to claim 3, **characterized in that** the two control points ($P_1$, $P_2$) on the tangents ($t_1$, $t_2$) coincide with a control point ($P_1 = P_2$) in an intersection point (S) of the tangents ($t_1$, $t_2$).

5. A wheel disc (1) according to one of the claims 1 to 4, **characterized in that** the contour of the wheel hub (3) after the Bezier curve (B) has a connecting contour in the form of a straight line (10), which extends at an angle different from zero, in particular an angle () of more than 5°, in relation to the axial direction (A).

6. A wheel disc (1) according to one of the claims 1 to 5, **characterized in that** the contour of the web (4) after the Bezier curve (B) has a connecting contour in the form of an arc.

7. A wheel disc (1) according to one of the claims 1 to 5, **characterized in that** the contour of the web (4) after the Bezier curve (B) has a connecting contour in the form of a straight (9).

8. A wheel disc (1) according to one of the claims 1 to 7, **characterized in that** the web (4) tapers in the direction from the wheel hub (3) towards the wheel rim (3).

9. A wheel disc (1) according to one of claims 1 to 8, **characterized in that** the Bezier curve (B) is formed in such a way that the tangentially continuous transition to the connecting contour is completed before in at least one of the radial sections a connecting region (7) for a receiving element and/or an attachment element is arranged on the web (4).

**Revendications**

1. Disque de roue (1) pour un véhicule ferroviaire avec

    1.1 un moyeu de roue (3) entourant un axe de rotation (2) ;
    1.2 un boudin de roue (5) ; et
    1.3 une âme (4) reliant le moyeu de roue (3) au boudin de roue (5) ;
    **caractérisé en ce que**
    1.4 une courbe de transition (6) est formée entre l'âme (4) et le moyeu de roue (3) et/ou
    une courbe de transition (6) est formée entre l'âme (4) et le boudin de roue (5) sur au moins un côté axial dans chaque plan de coupe radial, de telle manière que
    1.5 la ou chaque courbe de transition (6) soit conformée comme une courbe de Bézier (B),
    1.6 la courbe de Bézier (B) se raccorde à continuité de tangente au contour de l'âme (4) et
    1.7 la courbe de Bézier (B) se raccorde à continuité de tangente au contour du moyeu de roue (3) ou du boudin de roue (5).

2. Disque de roue (1) selon la revendication 1, **caractérisé en ce que** la courbe de Bézier (B) est conformée comme une courbe de Bézier (B) de deuxième ou de troisième degré.

3. Disque de roue (1) selon la revendication 1 ou 2, **caractérisé en ce que** la courbe de Bézier (B) présente deux points principaux ($P_0$, $P_3$) et un ou deux points de contrôle ($P_1$, $P_2$), les points principaux ($P_0$, $P_3$) se trouvant dans la zone dans laquelle la courbe de Bézier (B) se raccorde à continuité de tangente au contour de l'âme (4) et du moyeu de roue (3) ou du boudin de roue (5) et les points de contrôle ($P_1$, $P_2$) se trouvant sur deux tangentes ($t_1$, $t_2$) aux points principaux ($P_0$, $P_3$) dans les transitions à continuité de tangente.

4. Disque de roue (1) selon la revendication 3, **caractérisé en ce que** les deux points de contrôle ($P_1$, $P_2$) coïncident au niveau des tangentes ($t_1$, $t_2$) en un point d'intersection (S) des tangentes ($t_1$, $t_2$) pour former un seul point de contrôle ($P_1 = P_2$).

5. Disque de roue (1) selon l'une des revendications 1 à 4, **caractérisé en ce que** le contour du moyeu de roue (3) au niveau du raccordement à la courbe de Bézier (B) présente un contour de raccordement formé par une droite (10) qui forme un angle différent de zéro, en particulier un angle ($\gamma$) de plus de 5°, avec la direction axiale (A).

6. Disque de roue (1) selon l'une des revendications 1 à 5, **caractérisé en ce que** le contour de l'âme (4) au niveau du raccordement à la courbe de Bézier (B) présente un contour de raccordement en forme d'arc.

7. Disque de roue (1) selon l'une des revendications 1 à 5, **caractérisé en ce que** le contour de l'âme (4) au niveau du raccordement à la courbe de Bézier (B) présente un contour de raccordement en forme de droite (9).

8. Disque de roue (1) selon l'une des revendications 1 à 7, **caractérisé en ce que** l'âme (4) se resserre dans la direction allant du moyeu de roue (3) au boudin de roue (3).

9. Disque de roue (1) selon l'une des revendications 1 à 8, **caractérisé en ce que** la courbe de Bézier (B) est conformée de telle manière que la transition à continuité de tangente avec le contour de raccordement s'achève avant qu'une zone de raccordement (7) pour un élément de logement et/ou une pièce rapportée soit formée sur l'âme (4) dans au moins une des coupes radiales.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0794872 A1
- DE 2320726 A1

- WO 03064182 A1
- US 2013026723 A1